# EUROPEAN PATENT SPECIFICATION

(11) **EP 3 367 815 B1**
(45) Date of publication and mention of the grant of the patent: **02.03.2022**
(21) Application number: 16805174.6
(22) Date of filing: 28.10.2016
(51) Int. Cl.: A23L 2/385, A23L 2/68, A23L 2/52, A23L 2/56, A23L 2/60, A23L 33/21

(54) **SOLUBLE FIBER LIQUID BEVERAGE CONCENTRATE AND METHOD FOR DELIVERY OF SOLUBLE FIBER**
FLÜSSIGGETRÄNKKONZENTRAT MIT LÖSLICHEN BALLASTSTOFFEN UND VERFAHREN ZUR FREISETZUNG VON LÖSLICHEN BALLASTSTOFFEN
CONCENTRÉ DE BOISSON LIQUIDE À BASE DE FIBRES SOLUBLES ET PROCÉDÉ POUR ADMINISTRER DES FIBRES SOLUBLES

(30) Priority: 30.10.2015 US 201562249000 P; 02.05.2016 US 201615143674
(43) Date of publication of application: 05.09.2018
(73) Proprietor: Société des Produits Nestlé S.A., 1800 Vevey (CH)
(72) Inventor: KNUTZEN, Joe, Allendale, New Jersey 07401 (US); HAMMER, James D, Uxbridge, Massachusetts 01569 (US); DUKE, Bryan, New York, New York 10024 (US)
(74) Representative: Kamibayashi, Lynne
(86) International application number: PCT/GB2016/053361
(87) International publication number: WO 2017/072528

(56) References cited:
- WO-A1-2010/115890
- CA-A1- 2 112 345
- CA-A1- 2 337 623
- US-A- 5 851 578
- US-A1- 2003 077 368
- US-A1- 2006 121 158
- US-A1- 2013 040 036
- US-A1- 2015 044 326
- US-B1- 6 168 821
- US-B2- 9 131 717
- Anonymous ET AL: "Soluble Corn Fibre*: Health Benefits and Product Applications Innovating to Meet Nutrition, Health, and Wellness Needs Every Day *PROMITOR Soluble Corn Fibre PROMITOR Soluble Gluco Fibre in Europe", , 1 January 2014 (2014-01-01), XP055336487, Retrieved from the Internet: URL:http://www.foodnutritionknowledge.info /sites/foodnutritionknowledge/files/media/ pdf/SCF 2014 Final.pdf [retrieved on 2017-01-18]

## Description

### TECHNICAL FIELD

The present invention relates to edible products and methods for providing soluble fibers to persons as a nutritional supplement. More particularly, the present invention relates to soluble fiber (especially soluble dietary fiber) liquid beverage concentrates and methods for delivery of soluble fibers for nutritional supplements for persons.

### BACKGROUND OF THE PRESENT INVENTION

Edible fibers are one of many important food components that contribute to healthy physiological biometrics of youths and adults. Such fibers contribute to the nutritional processing and digestion of foods and to the elimination of solid wastes from foods. Edible fibers found in foods are of a soluble type and an insoluble type. Soluble fibers attract and absorb water. Soluble fibers absorb water while passing through a person's gastrointestinal tract including the stomach and intestines. This effects a reduction in the digestion process of foods, delays emptying of the stomach, and contributes to a sense that one is full while eating foods. As a result, a person feeling full may eat less and this helps control weight gain. Soluble fibers within a lower intestinal tract also contribute to consistency of stool formation and elimination. Suitable amounts of dietary soluble fibers have smoothing or balancing effects on bowel actions of a person by reducing by both constipation and diarrhea in waste elimination functions. These problems of stools being excessively dense or excessively fluid are referenced generally as irritable bowel syndrome. Further, soluble fiber within a dietary regime is considered as having favorable effects on blood sugar levels, insulin sensitivity and LDL cholesterol.

In 2006, and subsequently available annually, the National Academy of Sciences, Institute of Medicine promulgated suggested dietary intakes in a guide to nutrient requirements. The Institute recommends that male adults (over age 14 and less than age 50) consume about 38 g/day of total dietary fiber comprising both soluble and insoluble fibers; the recommendation for female adults is about 25 g/day total dietary fiber. For younger male children (over age 1), the recommendation ranged from about 19 g/day total dietary fiber, over age 4 at about 25 g/day total dietary fiber, and over age 9, about 31 g/day total dietary fiber. For younger female children (over age 1), the recommendation ranged from about 19 g/day total dietary fiber and over age 4 at about 25 g/day total dietary fiber. However, reports suggest that many persons consume less than half of the recommended dietary fibers.

Accordingly, there is a need in the art for an edible food containing soluble fibers and a method of delivering soluble fibers to persons as a nutritional supplement. It is to such that the present invention is directed.

CA 2 337 623 A1 discloses a beverage containing up to 39 %w/v soluble fiber, citric acid, flavour, and sweetener at pH 4-4.6.

WO 2010/115890 discloses an acidic beverage with a pH 3.5-5 and a viscosity of about 20 mPa.s. and comprising soluble fibre, acidulent, flavour, sweetener and preservatives.

US 5851578 discloses a concentrated beverage containing about 20% soluble fibre, citric acid, sodium benzoate and acesulfame-K.

US 6168821 discloses a concentrated beverage having a pH of 3.5 - 7 and containing soluble fibre, acidulant, preservative and flavour.

CA 2112345 discloses a beverage concentrate containing soluble fibre, flavour, acidulant and preservative wherein the amount of fibre is 1-4 g per 10 ounce of beverage products after dilution.

### SUMMARY OF THE PRESENT INVENTION

The present invention meets the need in the art by
providing a flavored, fiber-enriched liquid beverage concentrate, comprising an acidulant, a flavor, a high-intensity sweetener, a soluble fiber, a preservative and water, the soluble fiber comprising 20 to 60 %w/w of the concentrate with a pH in a range of 1.2 to 4.0;
wherein the soluble fiber is corn fiber;
wherein the preservative is 0.01 to 0.3 per cent by weight of the beverage concentrate;
wherein the concentrate has a viscosity of between 0.025 Pa•s (25 cP) and 0.07 Pa•s (70 cP) (Brookfield Viscosity (Spindle LV2@3ORPM@25°C)).

Preferably, the soluble fiber comprises 50 %w/w of the concentrate, more preferably 33 %w/w of the concentrate.

Preferably, the concentrate volume is 5 to 10 ml per serving.

Preferably, the acidulant comprises 4 to 8 %w/w of the concentrate, more preferably 6 %w/w of the concentrate.

Preferably, the volume of the acidulant provides the beverage concentrate with a pH of 1.5 to 3.5, more preferably a pH of 1.5.

Preferably, the soluble fiber comprises between 2.5 and 4 grams by weight per serving of the beverage concentrate, more preferably 3 grams by weight per serving.

Preferably, the preservative is selected from the group consisting of sodium benzoate, potassium sorbate, and mixtures thereof.

Preferably, the preservative is 0.1 per cent by weight of the beverage content. Preferably, the acidulant comprises citric acid.

Preferably, the beverage concentrate further comprises a buffering agent for adjusting the pH of the beverage concentrate to a selected pH in a range of between 1.2 pH and 4.0 pH.

Preferably, the concentrate has a viscosity of 0.03 Pa·s (30 cP) (Brookfield Viscosity (Spindle LV2@3ORPM@25°C)).

In another aspect, the present invention provides a method of delivering a soluble fiber (e.g. soluble dietary fiber) for human consumption, comprising the steps of:
(a) providing a dose of 5-10 ml of the beverage concentrate according to the invention; and
(b) admixing the beverage concentrate with water to a volume in a range of 177 ml (6 ounces) to 591 ml (20 ounces).

Preferably, the volume is 237 ml.

Preferably, the method further includes the step of pasteurizing of the beverage concentrate.

The typical amount of the beverage concentrate that is used per serving is from 5 mL to 10 mL.

Objects, advantages, and features of the present invention may be readily determined upon a reading of the detailed description in conjunction with the drawings and the appended claims.

### DETAILED DESCRIPTION

The soluble fiber is corn fiber.

The term "fiber-enriched" (e.g. fiber-enriched liquid beverage concentrate) refers to a high fiber product that may be used as a nutritional supplement to increase a person's intake of fiber (e.g. dietary fiber).

The term "liquid beverage concentrate" refers to a liquid product that may be diluted with drinking water in order to produce a beverage suitable for human consumption.

Preparation of the liquid concentrate involves mixing of the water carrier with the constituents, for example, in sequence of a preservative (if any), the sweetener, the soluble fiber (e.g. soluble dietary fiber), the flavoring, coloring (if any), and the acidulant.

In another aspect, preparation of the liquid concentrate involves mixing of the water carrier with the constituents, for example, in sequence of a preservative (if any), the sweetener, the dietary fiber, the flavoring, coloring (if any), and the acidulant.

A packaging for the liquid concentrate preferably contains a plurality of servings although the liquid concentrate may in an alternate embodiment be provided in a single-serving package.

The packaging dispenses a serving amount for dilution in added water content. A serving amount of the illustrated embodiments is 7 to 11 grams or 1.5 teaspoons, preferably 9.5 grams, and delivering 2.5 grams to 4 grams soluble fiber (e.g. soluble dietary fiber), preferably 3 grams of soluble fiber (e.g. soluble dietary fiber).

In certain embodiments, a serving amount is 7 to 11 grams or 1.5 teaspoons, preferably 9.5 grams, and delivering 2.5 grams to 4 grams dietary fiber (e.g. soluble dietary fiber), preferably 3 grams of dietary fiber (e.g. soluble dietary fiber).

Dietary fibers are non-digestible carbohydrates in the diet that, when consumed, pass through the small intestine into the large intestine where they may be partially or completely fermented by colonic microbiotica.

The soluble fiber is corn fiber.

In a preferred embodiment, the corn fiber is for example PROMITO R^{®} Soluble Cora Fiber 70L.

As used herein, the term "solubilize completely in water" may be understood to refer to the solubility properties of a substance (e.g. a type of fiber) in water. Substances that "solubilize completely in water" produce a uniform solution or suspension, wherein at least about 50% of the substance is dissolved in (i.e. molecularly dispersed within) the solution, such as at least about 60%, for example at least about 70% (e.g. at least about 80%).

As used herein, the phrase "normal conditions" may be understood to indicate that the specified parameter (e.g. solubility) is determined at ambient temperature (e.g. about 25 °C) and at atmospheric pressure.

While grain fibers are primarily insoluble, some grain fibers have satisfactory properties for use with the liquid beverage concentrate of the present invention. Grain fibers could also be processed to improve solubility. Such processing may comprise heating and/or chemical treatment (e.g. acid treatment). The present invention uses soluble corn fiber which is obtained through the acidic hydrolysis of corn starch and subsequent cooling, during which a mixture of β-glycosidic linkages are formed. These β-glycosidic linkages are resistant to mammalian enzymatic hydrolysis. Soluble corn fiber may also be obtained by isolating an oligosaccharide-rich fraction from corn syrup.

A preferred source of soluble corn fiber is soluble corn fiber (such as PROMITOR^{®} Soluble Corn Fiber 70L, which contains at least 70% (by weight) fiber (50.4% (by weight) dietary fiber

A preservative is mixed with the liquid beverage concentrate. Acid hydrolysis reduces some fiber sources to simpler carbohydrate and thus reduce the effective activity of the soluble fiber. Such reduction may in alternate embodiments be mitigated by buffering the pH of the concentrate at 4.5 or higher. Suitable preservatives include sodium benzoate, potassium sorbate, polylysine, propylene glycol, and methylparaben.

The preservative is present in amounts of from 0.01% w/w to 0.30% w/w (relative to the beverage concentrate), such as from 0.02% w/w to 0.25% w/w, for example from 0.05% w/w to 0.20% w/w (e.g. from 0.05% w/w to 0.15% w/w).

Sodium benzoate may be useful in formulations having a pH of 1.2 to 4, but is preferably used in low concentrations of 0.1% to 0.2% w/w, while providing activity spectrum against yeasts, molds and bacteria.

Potassium sorbate may be useful in formulations of higher pH and provides good water solubility but may be unstable at elevated temperatures (38°C) or in strong light, with an activity spectrum against molds and yeasts primarily.

Polylysine may be useful in high temperature, high pH products with a broad spectrum antimicrobial activity that results from a strong cationic charge, and readily dissolves in water with minimal effect on taste and odor. Polylysine may work synergistically with other preservatives while providing temperature differences stability and pH tolerance .

Propylene glycol provides activity against bacteria and fungi, and while miscible with water, required higher levels of use concentration.

Methylparaben provides an activity spectrum against fungi and gram-positive bacteria but relatively poor activity against pseudomonads. While having broad pH range, methylparaben is poorly water soluble and is incompatible with nonionic and cationic surfactants.

Alternatively, reduced preservative content may be obtained through mechanical actions including controlled water activity, pasteurization and heat processing, and pH control. Controlled water activity may be attained with high concentration of fiber or other dissolved solids that reduce water activity. High temperature processing and pasteurization of the concentrate may be appropriate for tolerant fiber sources. Low pH of particular preferred embodiments provides a tart flavor upon dilution and may assist with preventing or inhibiting microbial growth.

Suitable pH values for the formulations are in the range of from 1.2 to 4.0, such as from 1.2 to 3.5, for example from 1.2 to 2.5 or from 1.2 to 2.0, preferably from 1.2 to 1.8 (e.g. from 1.3. to 1.6).

It is to be further appreciated that a high concentration of soluble fiber or dietary fiber (e.g. soluble dietary fiber) and solids reduces water activity and reduces a need for a discrete preservative. Further, container materials may provide a preservative effect on contents.

An alternate embodiment may include a stabilizer, such as alpha-cyclodextrin or gum acacia.

An alternate embodiment may include a binder, such as amorphophallus propol plant fibers and /or emulsifiers.

Compositions useful in accordance with the present invention may be prepared in liquid beverage concentrates for dilution in a supply of drinking water of between 77 ml (6 ounces) to 591 ml (20 ounces) of drinking water. The concentrated compositions are provided in an aqueous carrier of a volume of between 5 and 10 ml per dose for mixing in the diluent water for consumption.

Table 1 presents representative examples of the flavored, fiber-enriched, liquid beverage concentrate composition of the present invention.

**Table 1**

| | **Example 1** | **Example 2** | **Example 3** | **Example 4** |
|---|---|---|---|---|
| **Ingredient** | **Amount (grams)** | | | |
| Soluble fiber | 3.00 | 3.00 | 2.50 | 2.50 |
| Preservative | 0.01 | 0.01 | 0.01 | 0.01 |
| Acidulant | 0.30 | 0.20 | 0.30 | 0.23 |
| Sweetener | 0.22 | 0.11 | 0.22 | 0.10 |
| Flavor | qs | qs | qs | qs |
| Color | qs | qs | qs | qs |
| Water | <1.48 | <1.68 | <1.97 | <2.16 |
| Total | 5.00 | 5.00 | 5.00 | 5.00 |

Fiber-enriched, liquid beverage concentrate compositions consistent with Examples 1 - 4 were evaluated:

| **Fiber Source** | **Results** |
|---|---|
| Soluble corn fiber - 1 | Clear, stable, low flavor impact |
| Polydextrose - 1 | Clear, stable, low flavor impact |
| Soluble corn fiber with polydextrose | Clear, stable, low flavor impact |
| Soluble corn fiber with acacia | Slight haze initially, falls out after 4 days |
| Soluble corn fiber with dextrin | Hazy |
| Soluble corn fiber with hydrolyzed guar | Hazy |
| Soluble corn fiber with modified starch | Hazy |
| Polydextrose with acacia | Clear initially, falls out after 24 hours |
| Polydextrose with dextrin | Hazy |
| Polydextrose with hydrolyzed guar | Hazy |
| Polydextrose with modified starch | Hazy |
| Soluble corn fiber -1 | Clear, stable, low flavor impact |
| Polydextrose - 1 | Clear, stable, low flavor impact |

Example 5 in Table 2 below provides a base formulation that modifies Example 1 to provide a lower fiber percentage for the fiber-enriched, liquid beverage concentrate composition.

**Table 2**

| **Example 5** | | | | |
|---|---|---|---|---|
| **Ingredient** | **Amount (% w/w)** | **Amount (grams)** | **Composition (diluted to 12 oz. (350 g))** | **Amount (% as diluted)** |
| Soluble fiber | 50.00 | 2.50 | 2.50 | 0.714 |
| Preservative | 0.20 | 0.01 | 0.01 | 0.003 |
| Acidulant | 4.60 | 0.23 | 0.23 | 0.065 |
| Sweetener | 2.00 | 0.10 | 0.10 | 0.029 |
| Flavor | qs | qs | qs | |
| Color | qs | qs | qs | |
| Water | 43.20 | 2.16 | 2.16 | 0.617 |
| Added Water | | | 345.00 | 98.571 |
| Total | 100.00 | 5.00 | 350.00 | 100.00 |

Fiber-enriched, liquid beverage concentrate compositions according to Example 5 may use citric acid as the acidulant which allows adjusting the pH into a range of about 2.0 to about 3.0. Potassium sorbate may be added to protect from microbial growth.

**Table 3**

| Example 6 (outside the scope of the invention) is described in Table 3 below and provides a higher amount of soluble fiber in the concentrate than that provided in the embodiment of Example 5. The concentrate may include additional water for viscosity flow of the concentrate from a container when diluting with added water. | | | | |
|---|---|---|---|---|
| **Example 6** | | | | |
| **Ingredient** | **Amount (% w/w)** | **Amount (grams)** | **Composition (diluted to 12 oz (350 g))** | **Amount (% as diluted)** |
| Soluble fiber | 66.66 | 4.00 | 4.00 | 1.14 |
| Preservative | 0.17 | 0.01 | 0.01 | 0.003 |
| Acidulant | 3.83 | 0.23 | 0.23 | 0.065 |
| Sweetener | 1.67 | 0.10 | 0.10 | 0.029 |
| Flavor | qs | qs | qs | |
| Color | qs | qs | qs | |
| Water | 27.67 | 1.66 | 1.67 | 0.477 |
| Added Water | | | 344.00 | 98.286 |
| Total | 100.00 | 6.00 | 350.00 | 100.00 |

**Table 4**

| These examples each provide an unflavored soluble fiber concentrate. | | | |
|---|---|---|---|
| | | **Example 7** | **Example 8** |
| | **Ingredient** | **Amount % (% w/w)** | **Amount % (% w/w)** |
| | Soluble Corn Fiber 70% (PROMITOR^{®} 70L available from Tate & Lyle) (dietary fiber) | 75.00 | |
| | | (37.8) | |
| | Polydextrose (STA-LITE^{®} 370 polydextrose) | | 75.00 |
| | Potassium Sorbate, NF | 0.075 | 0.075 |
| | Potassium Benzoate, NF | 0.20 | 0.20 |
| | Citric Acid, anhydrous, USP | 1.00 | 1.00 |
| | Water | 23.725 | 23.725 |
| | Total | 100.00 | 100.00 |

The resulting fiber-enriched, liquid beverage concentrate yielded a uniform clear liquid having a light amber color and a visually slight viscosity and a pH of about 2.0 to 3.0, which concentrate dispersed quickly in a diluent water container with little or no mixing.

**Table 5**

| Example 9 (outside the scope of the invention) illustrates a black cherry flavored, fiber-enriched, liquid beverage concentrate composition consistent with Example 6. | | | | |
|---|---|---|---|---|
| **Example 9** | | | | |
| **Black Cherry Flavor** | | | | |
| **Ingredient** | **Amount % (w/w)** | **Amount (grams)** | **Composition (diluted to 12 oz (350 g))** | **Amount (% as diluted)** |
| Soluble corn fiber | 63.54 | 3.177 | 3.177 | 0.908 |
| Black cherry flavor | 0.77 | 0.0385 | 0.0385 | 0.011 |
| Citric Acid | 5.00 | 0.250 | 0.250 | 0.071 |
| Coloring (w/v) | 2.84 | 0.142 | 0.142 | 0.041 |
| Sweetener | 0.49 | 0.0245 | 0.0245 | 0.007 |
| Water | 27.35 | 1.368 | 1.368 | 0.392 |
| Added Water | | | 345.00 | 98.57 |
| Total | 100.00 | 5.00 | 350.00 | 100.00 |

An alternate embodiment of Example 9 includes a preservative comprising potassium sorbate in an amount of 0.10 (w/w).

The resulting flavored fiber-enriched, liquid beverage concentrate in the alternate embodiment yielded a uniform transparent purple (dark reddish purple) liquid having a visually slight viscosity with a pH of about 1.43, which concentrate dispersed quickly in a diluent water container with little or no mixing. The concentrate tested to a Brookfield Viscosity (Spindle LV2@30RPM@25°C) of about 35 cps and a specific gravity of about 1.243.

**Table 6**

| Example 10 (outside the scope of the invention) provides an orange tangerine flavored, fiber-enriched, liquid beverage concentrate composition that differs from Example 5 by changing the acidulant and sweetener to increase tartness. | | | | |
|---|---|---|---|---|
| **Example 10** | | | | |
| **Orange Tangerine Flavor** | | | | |
| **Ingredient** | **Amount % (w/w)** | **Amount (grams)** | **Composition (diluted to 12 oz (350 g))** | **Amount (% as diluted)** |
| Soluble corn fiber | 63.59 | 3.180 | 3.180 | 0.908 |
| Natural orange tangerine flavor | 1.24 | 0.062 | 0.062 | 0.018 |
| Citric Acid | 6.00 | 0.300 | 0.300 | 0.085 |
| Coloring (w/v) | 1.48 | 0.075 | 0.075 | 0.021 |
| Sweetener | 0.46 | 0.023 | 0.023 | 0.007 |
| Water | 27.23 | 1.36 | 1.36 | 0.389 |
| Added Water | | | 345.00 | 98.57 |
| Total | 100.00 | 5.00 | 350.00 | 100.00 |

An alternate embodiment of Example 10 includes a preservative comprising potassium sorbate in an amount of 0.10 (w/w).

The resulting flavored fiber-enriched, liquid beverage concentrate in the alternate embodiment yielded a uniform translucent orange (medium) liquid having a visually slight viscosity and a pH of about 1.41, which concentrate dispersed quickly in a diluent water container with little or no mixing. The concentrate tested to a Brookfield Viscosity (Spindle LV2@30RPM@25°C) of about (0.035 Pa•s (about 35 cps) and a specific gravity of about 1.245.

In an embodiment of the present invention, the beverage concentrate is a flavored, fiber-enriched liquid beverage concentrate formulated to contain a soluble fiber comprising 20 to 60 percent by weight of the beverage concentrate with a pH in a range of 1.2 to 4.0, and further comprising an acidulant of citric acid in a range of from 1% w/w to 8% w/w (relative to the beverage concentrate), for example 1% w/w to 7% w/w (preferably 2% w/w to 6% w/w, and more preferably 4% w/w to 6% w/w) and further including a flavor and a sweetener. In preferred embodiments, the sweetener is a high intensity sweetener, and is present in an amount of from 0.1% w/w to 2.0% w/w (relative to the beverage concentrate), such as from 0.2% w/w to 1.0% w/w, for example 0.3% w/w to 0.8% w/w (e.g. 0.3% w/w to 0.6% w/w).

In a further embodiment of the present invention, the beverage concentrate is a flavored, fiber-enriched liquid beverage concentrate formulated to contain a dietary fiber (e.g. soluble dietary fiber) comprising 20 to 60 percent by weight of the beverage concentrate with a pH in a range of 1.2 to about 4.0, and further comprising an acidulant of citric acid in a range of from 1% w/w to 8% w/w (relative to the beverage concentrate), for example 1% w/w to 7%» w/w, preferably 2% w/w to 6% w/w, and more preferably 4% w/w to 6%» w/w, and further including a flavor and a sweetener. In preferred embodiments, the sweetener is a high intensity sweetener, and is present in an amount of from 0.1% w/w to 2.0% w/w, such as 0.2% w/w to 1.0% w/w, for example 0.3% w/w to 0.8% w/w (e.g. 0.3% w/w to 0.6% w/w).

**Table 7**

| Example 11 provides an orange tangerine flavored, fiber-enriched, liquid beverage concentrate composition. | |
|---|---|
| **Example 11** | |
| **Ingredient** | **Amount % (w/w)** |
| PROMITOR 70L Soluble Corn Fiber (dietary fiber) | 66.67 |
| | (33.6) |
| Natural orange tangerine flavor | 1.08 |
| Citric Acid | 5.24 |
| Coloring (w/v) | 1.29 |
| Sweetener | 0.40 |
| Potassium Sorbate | 0.10 |
| Water | 25.22 |
| Total | 100.00 |

A 100 ml container of the flavored, fiber enriched, liquid beverage concentrate of Example 11 provides approximately 13.3 doses per container (7.5 ml per dose) with 3.16 grams soluble fiber per serving, when each serving is prepared in a 227 gram (8 ounce) diluent supply of drinking water.

Table 8 below provides ranges for the constituent ingredients of the flavored, fiber-enriched, liquid beverage concentrate composition in varying embodiments of the present invention. It is to be appreciated that the embodiments having a relatively higher concentration of soluble fiber dissolve in a smaller amount of diluent carrier water. While such embodiments may have increased viscosity, it is believed that the liquid beverage concentrate may nevertheless dispense from a container as a flowable stream under at least squeezing pressure applied by a user to the container. It is expected that embodiments with a relatively lower concentration of soluble fiber flow more readily as a stream from the container. The flavored, fiber- enriched, liquid beverage concentrate composition readily mixes with a supply of a diluent drinking water for consumption of the soluble fiber which supply is a volume selected as appropriate for the user. A supply of diluent drinking water may be such as carried in an exercise drinking bottle holding a reasonably drinkable quantity of water such as between 113 grams (4 ounces) of water to 369 grams (16 ounces) of water, preferably from 113 grams (4 ounces) to 340 grams (12 ounces) of water, more preferably between 170 grams (6 ounces) of water to 283 grams (10 ounces) of water, and preferably 227 grams (8 ounces) of water, selectively by the user, while providing 2.00 to 4.50 grams of soluble fiber (e.g. soluble dietary fiber), preferably 2.50 to 3.50 grams of soluble fiber (e.g. soluble dietary fiber), and more preferably 2.50 to 3.00 grams of soluble fiber (e.g. soluble dietary fiber).

**Table 8**

| **Constitute Embodiments Of Flavored, Fiber-Enriched, Liquid Beverage Concentrate Composition** | |
|---|---|
| **Ingredient** | **Amount (% w/w)** |
| Soluble fiber | 20.00 - 60.00 |
| Preservative | 0.01 - 0.30 |
| Acidulant | 4.00 - 8.00 |
| Sweetener | 0.10 - 3.00 |
| Flavor | qs |
| Color | qs |
| Water | 28.70 - 75.89 |
| Total | 100.00 |

Generally, the constituents of the flavored, fiber-enriched, liquid beverage concentrate composition are added into the water sequentially as follows: preservative (if any), sweetener, soluble fiber (which contains dietary fiber), flavoring, coloring, and acidulant. The preparation procedure may be as follows:
- charge the formulation quantity of water into a suitable mixing vessel;
- add preservative (if any) and mix to dissolve;
- add sweetener and mix to dissolve;
- add flavoring and mix;
- add coloring (if any) and mix;
- add soluble fibers and mix until uniform;
- add acidulant and mix until uniform and clear.

The acidulant, such as citric acid, is added after the other ingredients have been dissolved and the mixture is uniform.

The term "acidulant" refers to a chemical compound (or a mixture of compounds) that confers a tart, sour, or acidic flavor to food. Commonly-employed acidulants include citric acid, malic acid, lactic acid, lactic acid, phosphoric acid and tartaric acid.

In particular embodiments the acidulant is citric acid, malic acid or a mixture thereof. In more particular embodiments the acidulant is citric acid.

In particular embodiments, the acidulant is present in a range of from 1% w/w to 8% w/w (relative to the beverage concentrate), for example 1% w/w to 7% w/w, preferably 2% w/w to 6% w/w, and more preferably 4% w/w to 6% w/w.

Early addition of the acidulant may cause poorly-soluble ingredients, such as benzoic acid or sorbic acid if present, to drop out of solution and re-dissolving may require application of heat.

The sweetener preferably is a low-calorie, high sweetness ingredient, such as a high-intensity sweetener.

The term "high-intensity sweetener" refers to sugar substitutes that are substantially sweeter than sugar (sucrose). High intensity sweeteners currently approved by the FDA include saccharin, aspartame, acesulfame potassium (Ace-K), sucralose, neotame, advantame, steviol glycosides and luo han guo fruit extracts.

Particular high intensity sweeteners that may be mentioned are shown below, along with their commonly-accepted potency figures.

In particular embodiments, the high-intensity sweetener is sucralose.

| **Sweetener** | **Sweetness compared to sugar (sucrose)** |
|---|---|
| Cyclamate | 30 times as sweet |
| Stevioside | 100-250 times as sweet |
| Mogroside v | 100-300 times as sweet |
| Rebaudioside a | 150-300 times as sweet |
| Acesulfame-k | 200 times as sweet |
| Aspartame | 200 times as sweet |
| Saccharine | 300 times as sweet |
| Neohesperidin dihydrochalcone | 300 times as sweet |
| Sucralose | 600 times as sweet |
| Neotame | 8000 times as sweet |

In preferred embodiments, the high intensity sweetener is present in an amount of from 0.1% w/w (relative to the beverage concentrate) to 3.0% w/w, for instance from 0.1%) w/w to 2.0% w/w, such as from 0.2% w/w to 1.0% w/w, for example 0.3% w/w to 0.8% w/w (e.g. 0.3% w/w to 0.6% w/w).

While a sweetness/tartness profile available from compositions according to the present invention is broad, the fiber-enriched, liquid beverage concentrate may be diluted to 8.0 fluid ounces +/- 4.0 fluid ounces common to conventional water bottles associated with persons who participate in a variety of exercise regimes while maintaining an acceptable flavor profile during use of the composition. The skilled person will appreciate that the assessment of flavor is highly subjective and will vary to a large degree from person to person. In this context, the phrase "acceptable flavor profile" may be understood to refer to a range of flavors that are broadly considered palatable by a typical consumer. A starting point for sweetness targeting may be 12° brix sugar solution at the 12 ounce dilution (one degree Brix is 1 gram of sucrose in 100 grams of solution and represents the strength of the solution as percentage by mass).

The fiber-enriched, liquid beverage concentrate according to the present invention provides soluble fiber as a nutritional supplement having a satisfactory mouthfeel while being readily dispensable as a flowable stream from a container with a visual viscosity yet dispersible in water to yield a uniform clear, transparent, or translucent dilution drinkable source of soluble fiber, and may readily be flavored for taste satisfaction. The fiber weight ranges from 20% w/w to 60% w/w, for example from 30% w/w to 60% w/w, such as from 30% w/w to 50% w/w, preferably 26%» w/w to 43%» w/w for example from a 30%» w/w to 40%» w/w, while providing between 2.5 grams soluble fiber per serving to 4 grams soluble fiber per serving, preferably between 2.5 and 3.5 grams soluble fiber per serving, and more preferably 3.0 grams soluble fiber per serving, with a preferred viscosity of the flavor enriched liquid beverage concentrate of 0.01 Pa•s to 0.10 Pa·s (10 cp to 100 cp), in particular 0.025 Pa·s to 0.085 Pa·s (25 cp to 85 cp), for example 0.025 Pa•s to a 0/075 Pa•s (25 cp to 75 cp), 0.04 Pa·s to 0.07 Pa·s (40 to 70 cp), preferably 0.03 Pa·s to 0.05 Pa·s (30 cp to 50 cp), such as 0.03 Pa•s to 0.04 Pa·s (30 cp to 40 cp), and more preferably 0.03 Pa·s to 0.035 Pa·s (30 cp to 35 cp) (e.g. 0.035 Pa·s (35 cp)).

Viscosity is measured using Brookfield Viscometer. The quoted values refer to those obtained using Spindle LV2 at 30 RPM and at a temperature of 25 °C.

The dietary fiber weight in the beverage concentrate may range from about 20% w/w to 60% w/w, for example from 30% w/w to 60% w/w, such as from 30% w/w to 50% w/w, preferably 26% w/w to 43% w/w for example from 30% w/w to 40% w/w, while providing between 2.5 grams soluble dietary fiber per serving to 4 grams soluble dietary fiber per serving, preferably between 2.5 and 3.5 grams soluble dietary fiber per serving, and more preferably 3.0 grams soluble dietary fiber per serving, with a viscosity of the flavor enriched liquid beverage concentrate of 25 cp to 70 cp, preferably 30 cp to 50 cp, and more preferably 30 cp to 35 cp (e.g. 35 cp).

The compositions may be packaged for multiple serving doses or single serving dose. The compositions further are stable during ordinary storage and shipping of containers such that the soluble fibers remain in solution for a commercially practical period and in temperatures typically experienced for commercial nutritional products. In particular embodiments the flavored, fiber-enriched liquid beverage concentrate is provided as a packaged product comprising one or more servings (e.g. from 1 to 20 servings) as described hereinabove.

In certain embodiments, flavors that may be included in the formulations include fruit flavors (e.g. citrus fruits (orange, lemon, lime, grapefruit, tangerine, orange), berries (strawberry, raspberry, blueberry, cranberry), apple, pineapple, grape, cherry, and the like), botanical flavors (i.e. essential oils derived from natural sources e.g. cola flavoring and flavors derived from tea and coffee) and spices, and mixtures thereof. Preferred flavorings include natural fruit flavors (e.g. orange/tangerine flavor). The terms flavor and flavoring are used herein interchangeably.

In a particular embodiment, the flavored fiber-enriched liquid beverage concentrate comprises soluble fiber (e.g. soluble dietary fiber) in an amount of from 20% w/w (relative to the beverage concentrate) to 60% w/w and an acidulant in an amount of from 1% w/w (relative to the beverage concentrate) to 8% w/w, and has a pH in a range of from 1.2 to 4.0.

In a further particular embodiment, the flavored fiber-enriched liquid beverage concentrate comprises soluble fiber (e.g. soluble dietary fiber) in an amount of from 30% w/w (relative to the beverage concentrate) to 60% w/w and an acidulant in an amount of from 4% w/w (relative to the beverage concentrate) to about 6% w/w, and has a pH in a range of from 1.2 to 3.0.

In a further particular embodiment, the flavored fiber-enriched liquid beverage concentrate comprises soluble fiber (e.g. soluble dietary fiber) in an amount of from 30% w/w (relative to the beverage concentrate) to 50% w/w and an acidulant in an amount of from 4% w/w (relative to the beverage concentrate) to 6% w/w, and has a pH in a range of from 1.2 to 2.0.

In a further particular embodiment, the flavored fiber-enriched liquid beverage concentrate comprises soluble dietary fiber in an amount of from 20% w/w (relative to the beverage concentrate) to 60% w/w and an acidulant in an amount of from 1% w/w (relative to the beverage concentrate) to 8% w/w, and has a pH in a range of from about 1.2 to about 4.0.

In a further particular embodiment, the flavoured fiber- enriched liquid beverage concentrate comprises soluble dietary fiber in an amount of from 26% w/w (relative to the beverage concentrate) to 43% w/w and an acidulant in an amount of from 4% w/w (relative to the beverage concentrate) to 6% w/w, and has a pH in a range of from 1.2 to 3.0.

In a further particular embodiment, the flavored fiber-enriched liquid beverage concentrate comprises soluble dietary fiber in an amount of from 30%» w/w (relative to the beverage concentrate) to 40% w/w and an acidulant in an amount of from 4% w/w (relative to the beverage concentrate) to 6% w/w, and has a pH in a range of from 1.2 to 2.0.

The formulations described herein may have the advantage that they are higher in fiber than, of lower viscosity than, more palatable than, more convenient than and/or more stable to storage than high-fiber supplements known in the art (in the form of concentrated liquid formulations or otherwise). In particular, the formulations described herein provide a shelf-stable, high fiber product that is readily dispensible and/or disperses easily in water to form a palatable beverage.

## Claims

1. A flavored, fiber-enriched liquid beverage concentrate, comprising an acidulant, a flavor, a high-intensity sweetener, a soluble fiber, a preservative and water, the soluble fiber comprising 20 to 60 %w/w of the concentrate with a pH in a range of 1.2 to 4.0;
wherein the soluble fiber is corn fiber;
wherein the preservative is 0.01 to 0.3 per cent by weight of the beverage concentrate;
wherein the concentrate has a viscosity of between 0.025 Pa·s (25 cP) and 0.07 Pa·s (70 cP) (Brookfield Viscosity (Spindle LV2@3ORPM@25°C)).

2. The beverage concentrate as recited in claim 1, wherein the soluble fiber comprises 50 %w/w of the concentrate.

3. The beverage concentrate as recited in claim 1 or claim 2, wherein the soluble fiber comprises 33 %w/w of the concentrate.

4. The beverage concentrate as recited in any one of claims 1 to 3, wherein the concentrate volume is 5 to 10 ml per serving.

5. The beverage concentrate as recited in any one of claims 1 to 4, wherein the acidulant comprises 4 to 8 %w/w of the concentrate.

6. The beverage concentrate as recited in claim5, wherein the acidulant comprises 6 %w/w of the concentrate.

7. The beverage concentrate as recited in any one of claims 1 to 6, wherein the volume of the acidulant provides the beverage concentrate with a pH of 1.5 to 3.5.

8. The beverage concentrate as recited in claim 7, wherein the volume of the acidulant provides the beverage concentrate with a pH of 1.5.

9. The beverage concentrate as recited in any one of claims 1 to 8, wherein the soluble fiber comprises between 2.5 and 4 grams by weight per serving of the beverage concentrate.

10. The beverage concentrate as recited in any one of claims 1 to 9, wherein the soluble fiber comprises 3 grams by weight of the beverage concentrate per serving.

11. The beverage concentrate as recited in any one of claims 1 to 10, wherein the preservative is selected from the group consisting of sodium benzoate, potassium sorbate, and mixtures thereof.

12. The beverage concentrate as recited in any one of claims 1 to 11, wherein the preservative is 0.1 per cent by weight of the beverage concentrate.

13. The beverage concentrate as recited in any one of claims 1 to 12, wherein the acidulant comprises citric acid.

14. The beverage concentrate as recited in any one of claims 1 to 13, wherein the concentrate has a viscosity of 0.03 Pa·s (30 cP) (Brookfield Viscosity (Spindle LV2@3ORPM@25°C)).

15. The beverage concentrate as recited in any one of claims 1 to 14, further comprising a buffering agent for adjusting the pH of the beverage concentrate to a selected pH in a range of between 1.2 pH and 4.0 pH.

16. A method of delivering a soluble fiber for a nutritional supplement for persons, comprising the steps of:
(a) providing a dose of 5-10 ml of the beverage concentrate according to any one of claims 1 to 15; and
(b) admixing the beverage concentrate with water to a volume in a range of 177 ml (6 ounces) to 591 ml (20 ounces).

17. The method as recited in claim 16, wherein the volume is 237 ml (8 ounces).

18. The method as recited in claim 16 or claim17, further comprising the step of pasteurizing of the beverage concentrate.

## Patentansprüche

1. Aromatisiertes, mit Ballaststoff angereichertes Flüssiggetränkekonzentrat, umfassend ein Säuerungsmittel, ein Aroma, einen hochintensiven Süßstoff, einen löslichen Ballaststoff, ein Konservierungsmittel und Wasser, wobei der lösliche Ballaststoff 20 bis 60 Gew.-% des Konzentrats mit einem pH-Wert in einem Bereich von 1,2 bis 4,0 ausmacht;
wobei der lösliche Ballaststoff Maisballaststoff ist;
wobei das Konservierungsmittel zu 0,01 bis 0,3 Gewichtsprozent des Getränkekonzentrats vorliegt;
wobei das Konzentrat eine Viskosität zwischen 0,025 Pa·s (25 cP) und 0,07 Pa·s (70 cP) (Brookfield-Viskosität (Spindel LV2 bei 3O RPM bei 25 °C)) aufweist.

2. Getränkekonzentrat nach Anspruch 1, wobei der lösliche Ballaststoff 50 Gew.-% des Konzentrats ausmacht.

3. Getränkekonzentrat nach Anspruch 1 oder Anspruch 2, wobei der lösliche Ballaststoff 33 Gew.-% des Konzentrats ausmacht.

4. Getränkekonzentrat nach einem der Ansprüche 1 bis 3, wobei das Konzentratvolumen 5 bis 1O ml pro Portion beträgt.

5. Getränkekonzentrat nach einem der Ansprüche 1 bis 4, wobei das Säuerungsmittel 4 bis 8 Gew.-% des Konzentrats ausmacht.

6. Getränkekonzentrat nach Anspruch 5, wobei das Säuerungsmittel 6 Gew.-% des Konzentrats ausmacht.

7. Getränkekonzentrat nach einem der Ansprüche 1 bis 6, wobei das Volumen des Säuerungsmittels dem Getränkekonzentrat einen pH-Wert von 1,5 bis 3,5 verleiht.

8. Getränkekonzentrat nach Anspruch 7, wobei das Volumen des Säuerungsmittels dem Getränkekonzentrat einen pH-Wert von 1,5 verleiht.

9. Getränkekonzentrat nach einem der Ansprüche 1 bis 8, wobei der lösliche Ballaststoff zwischen 2,5 und 4 Gramm, bezogen auf das Gewicht pro Portion des Getränkekonzentrats, ausmacht.

10. Getränkekonzentrat nach einem der Ansprüche 1 bis 9, wobei der lösliche Ballaststoff 3 Gramm, bezogen auf das Gewicht des Getränkekonzentrats pro Portion, ausmacht.

11. Getränkekonzentrat nach einem der Ansprüche 1 bis 10, wobei das Konservierungsmittel aus der Gruppe bestehend aus Natriumbenzoat, Kaliumsorbat und Mischungen davon ausgewählt ist.

12. Getränkekonzentrat nach einem der Ansprüche 1 bis 11, wobei das Konservierungsmittel zu 0,1 Gewichtsprozent des Getränkekonzentrats vorliegt.

13. Getränkekonzentrat nach einem der Ansprüche 1 bis 12, wobei das Säuerungsmittel Citronensäure umfasst.

14. Getränkekonzentrat nach einem der Ansprüche 1 bis 13, wobei das Konzentrat eine Viskosität von 0,03 Pa·s (30 cP) (Brookfield-Viskosität (Spindel LV2 bei 3O RPM bei 25 °C)) aufweist.

15. Getränkekonzentrat nach einem der Ansprüche 1 bis 14, ferner umfassend ein Puffermittel zum Einstellen des pH-Werts des Getränkekonzentrats auf einen ausgewählten pH-Wert in einem Bereich zwischen einem pH-Wert von 1,2 und einem pH-Wert von 4,0.

16. Verfahren zum Abgeben eines löslichen Ballaststoffs für eine Nahrungsergänzung für Personen, umfassend die Schritte:
(a) Bereitstellen einer Dosis von 5 bis 10 ml Getränkekonzentrat nach einem der Ansprüche 1 bis 15; und
(b) Mischen des Getränkekonzentrats mit Wasser bis zu einem Volumen in einem Bereich von 177 ml (6 Unzen) bis 591 ml (20 Unzen).

17. Verfahren nach Anspruch 16, wobei das Volumen 237 ml (8 Unzen) beträgt.

18. Verfahren nach Anspruch 16 oder Anspruch 17, ferner umfassend den Schritt des Pasteurisierens des Getränkekonzentrats.

## Revendications

1. Concentré de boisson liquide aromatisé, enrichi en fibres, comprenant un acidulant, un arôme, un édulcorant de haute intensité, une fibre soluble, un conservateur et de l'eau, la fibre soluble constituant 20 à 60 % en poids du concentré avec un pH dans une plage de 1,2 à 4,0 ;
dans lequel la fibre soluble est de la fibre de maïs ;
dans lequel le conservateur représente 0,01 à 0,3 pour cent en poids du concentré de boisson ;
dans lequel le concentré a une viscosité comprise entre 0,025 Pa·s (25 cP) et 0,07 Pa·s (70 cP) (viscosité Brookfield (mobile cylindrique LV2 à 30 tr/min à 25 °C)).

2. Concentré de boisson selon la revendication 1, dans lequel la fibre soluble constitue 50 % en poids du concentré.

3. Concentré de boisson selon la revendication 1 ou la revendication 2, dans lequel la fibre soluble constitue 33 % en poids du concentré.

4. Concentré de boisson selon l'une quelconque des revendications 1 à 3, dans lequel le volume de concentré est de 5 à 10 ml par portion.

5. Concentré de boisson selon l'une quelconque des revendications 1 à 4, dans lequel l'acidulant constitue 4 à 8 % en poids du concentré.

6. Concentré de boisson selon la revendication 5, dans lequel l'acidulant constitue 6 % en poids du concentré.

7. Concentré de boisson selon l'une quelconque des revendications 1 à 6, dans lequel le volume de l'acidulant fournit au concentré de boisson un pH de 1,5 à 3,5.

8. Concentré de boisson selon la revendication 7, dans lequel le volume de l'acidulant fournit au concentré de boisson un pH de 1,5.

9. Concentré de boisson selon l'une quelconque des revendications 1 à 8, dans lequel la fibre soluble constitue entre 2,5 et 4 grammes en poids par portion du concentré de boisson.

10. Concentré de boisson selon l'une quelconque des revendications 1 à 9, dans lequel la fibre soluble constitue 3 grammes en poids du concentré de boisson par portion.

11. Concentré de boisson selon l'une quelconque des revendications 1 à 10, dans lequel le conservateur est choisi dans le groupe constitué de benzoate de sodium, sorbate de potassium, et mélanges de ceux-ci.

12. Concentré de boisson selon l'une quelconque des revendications 1 à 11, dans lequel le conservateur représente 0,1 pour cent en poids du concentré de boisson.

13. Concentré de boisson selon l'une quelconque des revendications 1 à 12, dans lequel l'acidulant comprend de l'acide citrique.

14. Concentré de boisson selon l'une quelconque des revendications 1 à 13, dans lequel le concentré a une viscosité de 0,03 Pa·s (30 cP) (viscosité Brookfield (mobile cylindrique LV2 à 30 tr/min à 25 °C)).

15. Concentré de boisson selon l'une quelconque des revendications 1 à 14, comprenant en outre un agent tampon pour ajuster le pH du concentré de boisson à un pH sélectionné dans une plage comprise entre pH 1,2 et pH 4,0.

16. Procédé d'administration d'une fibre soluble pour un complément nutritionnel pour des personnes, comprenant les étapes consistant à :
(a) fournir une dose de 5 à 10 ml du concentré de boisson selon l'une quelconque des revendications 1 à 15 ; et
(b) mélanger le concentré de boisson avec de l'eau jusqu'à un volume dans une plage de 177 ml (6 onces) à 591 ml (20 onces).

17. Procédé selon la revendication 16, dans lequel le volume est de 237 ml (8 onces).

18. Procédé selon la revendication 16 ou la revendication 17, comprenant en outre l'étape de pasteurisation du concentré de boisson.
